# FASCICULE DE BREVET EUROPEEN

(11) **EP 3 856 579 B1**
(45) Date de publication et mention de la délivrance du brevet: **30.10.2024**
(21) Numéro de dépôt: 19783586.1
(22) Date de dépôt: 04.09.2019
(51) Int. Cl.: B60R 25/20

(54) **PROCÉDÉ DE COMMANDE À DISTANCE DU MOTEUR D'UN VÉHICULE AUTOMOBILE AU MOYEN D'UN APPAREIL MOBILE DE TÉLÉCOMMUNICATION**
VERFAHREN ZUR FERNBEDIENUNG EINES KRAFTFAHRZEUGS MITTELS EINES MOBILEN TELEKOMMUNIKATONSGERÄTES
METHOD FOR REMOTE-CONTROLLING THE MOTOR OR ENGINE OF A MOTOR VEHICLE BY MEANS OF A MOBILE TELECOMMUNICATION DEVICE

(30) Priorité: 26.09.2018 FR 1858810
(43) Date de publication de la demande: 04.08.2021
(73) Titulaire: Stellantis Auto SAS, 78300 Poissy (FR)
(72) Inventeur: MICHEL, Stephane, 90150 FOUSSEMAGNE (FR); ROY, Cyrille, 68200 MULHOUSE (FR); HANEN, Hugo, 68520 BURNHAUPT LE BAS (FR)
(86) Numéro de dépôt international: PCT/FR2019/052035
(87) Numéro de publication internationale: WO 2020/065157

(56) Documents cités:
- EP-A1- 1 046 557
- CN-A- 105 235 636
- FR-A1- 3 026 212
- US-A1- 2005 073 197
- US-A1- 2010 231 369

## Description

L'invention concerne un procédé de commande à distance du moteur d'un véhicule automobile au moyen d'un appareil mobile de télécommunication.

Plus particulièrement, l'invention s'intéresse à un procédé de commande à distance du moteur d'un véhicule automobile au moyen d'un appareil mobile de télécommunication dans une zone de détection et d'identification étendue.

### ÉTAT DE LA TECHNIQUE ANTÉRIEURE

L'invention concerne le domaine de la gestion et de la transmission d'informations et de données entre des appareils mobiles dits « *smart devices* » et des véhicules automobiles.

Certains véhicules automobiles sont aujourd'hui équipés de systèmes de contrôle électroniques, numériques et logiciels aptes et destinés à gérer de manière sécurisée des requêtes d'activation de différentes fonctions du véhicule, reçues depuis des appareils mobiles distants portés par l'utilisateur du véhicule ou des passagers et jumelés ou appairés au système de contrôle.

Ces systèmes de contrôle rapprochent les informations et données échangées par voie d'ondes à courte portée avec des éléments identifiants associés au véhicule considéré et enregistrés dans les appareils mobiles.

De manière générale, dans le contexte de la présente invention, l'expression « appareil mobile », terminal mobile ou « élément identifiant », désignera tout moyen, élément ou équipement, autorisé à activer les différentes fonctions d'un véhicule automobile. Il peut ainsi s'agir d'une clé, d'un badge, ou de tout autre moyen et, en particulier, du type smartphone, tablette numérique, montre connectée, .... qui, dans le procédé de l'invention ou par la mise en oeuvre du procédé, sera autorisé à déclencher la commande d'activation de fonctions spécifiques du véhicule considéré.

Plus précisément, les éléments identifiants intègrent des codes qui sont reconnus par le véhicule automobile avec lequel les appareils mobiles sont jumelés pour se reconnaître mutuellement. Un échange de données (par exemple selon un protocole de connexion Bluetooth) entre le système de contrôle électronique du véhicule et l'élément identifiant permet d'aboutir à l'exécution de la commande d'une fonction sur le véhicule, par exemple, le verrouillage/déverrouillage des portes ou le démarrage du moteur du véhicule.

Pour des raisons de sécurité, la validation des commandes à distance de certaines fonctions du véhicule est toutefois conditionnée par la position où se trouve l'appareil mobile par rapport au véhicule. Ainsi, des fonctions, telles que le déverrouillage des ouvrants du véhicule, ne peuvent être activées que si l'utilisateur et son appareil mobile se trouvent à l'intérieur de l'habitacle dans l'environnement direct du système de contrôle ou à proximité immédiate du véhicule.

En particulier, pour effectuer le démarrage ou l'arrêt du moteur du véhicule, l'utilisateur et son appareil mobile doivent déjà être impérativement positionnés dans une zone dite de dépose (ou « inner area ») associée au système de contrôle embarqué et située dans l'habitacle au voisinage de la position du conducteur (généralement, dans un rayon d'environ 40 cm autour du levier de vitesses)..

Or, le véhicule ne peut pas se connecter de sa propre initiative à un appareil mobile et la décision de connexion au système de contrôle du véhicule ne peut donc être prise que par l'appareil mobile.

Le document FR3026212 décrit un système et un procédé qui permettent de verrouiller, déverrouiller les ouvrants d'un véhicule et de démarrer ce véhicule. Ce système utilise un système de contrôle embarqué dans le véhicule et un appareil mobile porté par le conducteur. Toutefois, le procédé ne fonctionne que si l'utilisateur/conducteur se trouve à moins de 50 cm du système de contrôle embarqué. Dans ce cas, la distance entre le véhicule et l'appareil mobile est déterminée par une méthode dite « RSSI » (*Received Signal Strength Indication*). *On connait par le document* EP1046557 *un système d'autorisation de démarrage pour un véhicule automobile, comportant un moyen d'identification installé sur la véhicule et relié à une unité centrale de commande pour commander un moyen d'anti-démarrage du véhicule, et un identifiant destiné à être porté par un utilisateur et apte à échanger à distance des données avec le moyen d'identification, pour permettre une autorisation de démarrage lorsque l'identifiant a été authentifié par le moyen d'identification. On connait par le document aussi par le document* FR3026212 *un dispositif de contrôle de de démarrage d'un véhicule comportant un premier dispositif de communication monté dans le véhicule et relié à l'unité de contrôle du véhicule, et un second dispositif de communication disposé dans un appareil mobile, les deux dispositifs étant aptes à communiquer entre eux pour réaliser une authentification de l'appareil mobile par le véhicule, ladite authentification autorisant le démarrage du véhicule. On connait par le document aussi par le document* US2005/073197 *un appareil de commande de démarrage à distance installé dans un véhicule. L'appareil de commande de démarrage à distance exécute la commande de démarrage du moteur en réponse à une instruction provenant d'un émetteur portable.*

Par conséquent, les systèmes et procédés de contrôle connus ne permettent pas de commander le démarrage, le maintien ou l'arrêt sécurisés du moteur du véhicule à partir d'un appareil mobile depuis toutes zones situées à l'intérieur de l'habitacle, voir à distance de l'habitacle.

Dans ces conditions, si les éléments identifiants s'éloignent trop de la zone de dépose, le système de contrôle considère que l'appareil mobile et l'utilisateur ont quitté l'habitacle et ne sont donc plus présents dans le véhicule et, pour des raisons de sécurité, commande alors l'arrêt du moteur.

Or, il peut arriver que l'appareil mobile soit tout simplement déplacé à l'intérieur de l'habitacle pour être entreposé à distance de la zone de dépose ou passer entre les mains de passagers, ce qui ne nécessite pas l'arrêt du moteur.

Un autre problème technique réside dans les remontés intempestives du message de perte d'identifiant, lorsque le téléphone quitte la zone de dépose de l'appareil mobile (« inner area ») située à l'intérieur du véhicule

En outre, dans ce contexte, il existe des risques de rejet de la commande de redémarrage suite à un calage (dit « Risque Sureté de Fonctionnement »). Ces risques ont conduit à supprimer l'affichage de la notification de démarrage.

Cette situation conduit également à un refus de la commande de démarrage à un appareil mobile tel qu'une montre connectée (ou « *Smart Watch* ») qui est pourtant un appareil mobile de plus en plus largement utilisé par le public et qui est, en particulier, porté par de nombreux automobilistes.

### EXPOSÉ DE L'INVENTION

La présente invention a pour but de résoudre les problèmes techniques posés par l'art antérieur en proposant un procédé permettant d'élargir le champ de la zone de détection et d'identification de l'appareil mobile au-delà de la zone de dépose et d'assurer ainsi à la fois une plus grande couverture et une sécurisation renforcée de la commande à distance du moteur des véhicules automobiles.

Ce but est atteint, selon l'invention, au moyen d'un procédé de commande à distance du moteur d'un véhicule automobile au moyen d'un appareil mobile de télécommunication jumelé au véhicule, ledit procédé comprenant la définition d'une zone de détection et d'identification de l'appareil mobile ayant commandé le démarrage à partir d'un système de contrôle embarqué dans l'habitacle du véhicule, caractérisé en ce que ladite zone est délimitée par une couverture de réception de notifications émises par le système de contrôle à destination dudit appareil mobile de telle sorte qu'après démarrage du moteur et suite à la réception ou à l'absence d'un message de validation émis par l'appareil mobile en réponse à une notification, le système de contrôle commande, respectivement, le maintien du moteur ou l'envoi d'un signal d'avertissement dans le véhicule.

Selon une caractéristique avantageuse du procédé, il est prévu le système de contrôle diffuse, dans ladite zone, un flux continu de messages cryptés susceptibles d'être déchiffrés par le seul appareil mobile ayant effectué le démarrage de façon à déterminer en temps réel sa position par rapport au véhicule.

De préférence, l'appareil mobile ayant effectué le démarrage se connecte au système de contrôle toutes les 10s pour indiquer sa position par rapport au véhicule.

Selon l'invention, il est prévu qu'en l'absence d'action en réponse au signal d'avertissement, le système de contrôle commande l'arrêt du moteur.

Selon une autre caractéristique du procédé de l'invention, la couverture de réception utilisée par le système de contrôle pour l'envoi de notifications à l'appareil mobile s'étend au-delà de la zone de dépose située au voisinage de la position du conducteur du véhicule.

Selon une autre caractéristique, la couverture de réception de notifications émises par le système de contrôle s'étend à l'extérieur du véhicule.

De préférence, le système de contrôle communique avec l'appareil mobile selon un protocole Bluetooth.

Un autre objet de l'invention est un système de contrôle pour la commande du moteur d'un véhicule automobile utilisant le procédé présentant les caractéristiques définies ci-dessus.

Encore un autre objet de l'invention est un programme d'ordinateur comprenant des instructions pour l'exécution des étapes d'un procédé présentant les caractéristiques définies ci-dessus.

L'invention porte également sur un véhicule automobile équipé d'un système de contrôle tel que défini ci-dessus, permettant la mise en oeuvre d'un procédé pour la commande à distance du moteur au moyen d'un appareil mobile de télécommunications.

L'invention permet d'obtenir un élargissement de la zone de recherche et d'identification de l'appareil mobile et évite ainsi des notifications intempestives d'alerte de perte d'identifiant.

Du fait que le procédé de l'invention, n'autorise qu'un seul redémarrage du moteur après calage dans le cycle de roulage du véhicule, les risques de refus de la commande de redémarrage suite à un calage (dit « Risque Sureté de Fonctionnement ») sont évités.

Dans le contexte du risque de refus ci-dessus, l'affichage de la notification de démarrage ayant été supprimé, la validation et l'exécution du démarrage ou de l'arrêt du moteur via une notification avec une montre connectée devient possible, ce qui permet de faciliter et d'améliorer la flexibilité des opérations de commande du moteur par l'utilisateur.

Le procédé de l'invention permet d'avertir l'utilisateur du véhicule en cas de disparition de l'appareil mobile ayant effectué le démarrage tout en étendant sa zone de détection et d'identification.

Du point de vue ergonomique, le procédé de l'invention permet ainsi d'éviter à l'utilisateur de se retrouver en fin de trajet, potentiellement à plusieurs centaines de kilomètres du lieu de démarrage du véhicule, sans possibilité de le verrouiller, ni de le redémarrer.

Le procédé de l'invention permet aussi l'utilisation de l'appareil mobile en cours de trajet sans nécessité de le maintenir à proximité immédiate de la zone de dépose du système de contrôle (en général dans un rayon de 40 cm autour du levier de vitesse).

D'autres caractéristiques et avantages de l'invention ressortiront à la lecture de la description qui va suivre.

### DESCRIPTION DÉTAILLÉE DE MODES DE RÉALISATION

Naturellement, les modes de réalisation décrits ci-après ne sont donnés qu'à titre d'exemples non limitatifs. Il est explicitement prévu que l'on puisse combiner entre eux ces différents modes pour en proposer d'autres.

Selon l'invention, certaines fonctions, telles que le démarrage ou l'arrêt du moteur, ne peuvent être commandées et activées que si l'utilisateur et son appareil mobile se trouvent à l'intérieur du véhicule, dans une première zone de détection et d'identification située dans l'environnement direct du système de contrôle ou à proximité immédiate du conducteur du véhicule et limitée à une zone dite de dépose (ou « inner area »).

Cette zone de dépose étant relativement étroite (par exemple de l'ordre de 40cm autour de la boîte de vitesses), les systèmes et procédés de contrôle connus ne permettent pas de commander le régime du moteur à partir d'un appareil mobile situé à l'extérieur de cette zone mais toujours à l'intérieur de l'habitacle, voir depuis l'extérieur de l'habitacle.

Dans ces conditions, le système de contrôle considère que l'appareil mobile et l'utilisateur et donc les éléments identifiants ont quittés le véhicule.

Le procédé de l'invention vise à élargir la zone de détection et d'identification de l'appareil mobile porté par l'utilisateur du véhicule pour permettre l'exécution de commandes du moteur à distance tout en facilitant l'utilisation de certains appareils numériques spécifiques tels que les montres connectées.

Selon l'invention, le système de contrôle établit une deuxième zone de détection et d'identification est désormais étendue au-delà à de la zone de dépose et est délimitée par une couverture de réception de notifications émises par le système de contrôle à destination de l'appareil mobile.

Dans ces conditions, lorsque l'appareil mobile est déplacé et éloigné du conducteur après démarrage du moteur, le système de contrôle diffuse un flux de messages cryptés (dit « advertising ») que les appareils mobiles jumelés au véhicule peuvent déchiffrer et qui indiquent le numéro de session de l'appareil mobile qui a effectué le démarrage.

Par la suite, seul cet appareil mobile reçoit (par exemple, toutes les 100ms) une invitation, sous forme d'une notification du système de contrôle, à se connecter pour répondre par un message de validation et confirmer ainsi sa présence dans le véhicule. L'appareil mobile utilise une mesure de la puissance en réception d'un signal reçu d'au moins une antenne Bluetooth du véhicule (ou RSSI pour Received Signal Strength Indication). Cette mesure est comparée à des seuils prédéterminés pour déterminé si l'appareil mobile est dans la première zone ou dans la deuxième zone.

Suite à la réception de ce message de validation émis par l'appareil mobile en réponse à la notification, le système de contrôle commande le démarrage du moteur ou le maintien du moteur tournant.

En revanche, l'absence de réponse de l'appareil mobile déclenche l'envoi par le système de contrôle d'un signal d'avertissement dans le véhicule, par exemple, par affichage d'un message sur l'écran du combiné situé sur le tableau de bord et couplé au système de contrôle.

En effet, l'absence de réponse de l'appareil mobile est interprétée par le système de contrôle comme une perte de connexion et, en conséquence, comme la sortie probable de l'appareil mobile et donc du conducteur de la zone de détection et d'identification.

Toutefois, pour vérifier de façon ultime la position du conducteur avant de commander l'arrêt définitif du moteur, le système de contrôle lui offre une dernière opportunité de confirmer sa présence à l'intérieur du véhicule et de maintenir le moteur tournant par une action directe sur le combiné.

Ainsi, même si le conducteur quitte physiquement la zone de détection et d'identification après démarrage du moteur, le système de contrôle considère qu'il est toujours présent dans cette zone, au moins, tant que le moteur tourne toujours.

Le procédé de l'invention prévoit néanmoins que la couverture de réception puisse déborder à l'extérieur de l'habitacle. En effet, les dimensions de la zone de détection élargie sont de quelques mètres en raison de la portée de la connexion du protocole Bluetooth utilisé par le système de contrôle pour communiquer avec l'appareil mobile.

La décision d'adresser une notification à un appareil mobile doit être préalablement enregistrée dans le système de contrôle du véhicule afin de gérer les priorités entre les différents moyens de commande du moteur (ainsi, il n'y aurait pas d'envoi de notification en présence à la fois d'une clé « mains libres » et d'un appareil mobile).

La décision de connexion au système de contrôle du véhicule est prise par l'appareil mobile. Le véhicule ne peut donc pas se connecter de sa propre initiative à l'appareil mobile.

Le procédé de l'invention permet au système de contrôle du véhicule de détecter la présence de l'appareil mobile qui a été utilisé pour effectuer le démarrage et de suivre ses déplacements dans la zone de détection et d'identification.

Le procédé de l'invention offre ainsi au conducteur et aux passagers, la possibilité d'utiliser de façon plus souple l'appareil mobile ayant commandé le démarrage pendant le trajet.

En outre, le conducteur n'est plus tenu de laisser son appareil mobile dans son environnement immédiat ou dans la zone de dépose pour couper le moteur.

De même, le démarrage du moteur peut être effectué, soit en plaçant de manière traditionnelle l'appareil mobile dans la zone restreinte de dépose située à l'intérieur de l'habitacle, soit à distance du véhicule dans la zone de détection élargie en acceptant la notification envoyée vers l'appareil mobile par le système de contrôle. Ainsi, l'inviolabilité du véhicule reste toujours garantie.

Ainsi, après démarrage du moteur, le procédé de l'invention permet de veiller en permanence à ce que l'appareil mobile reste à l'intérieur ou à proximité immédiate du véhicule, ce qui améliore la sécurité et la fluidité d'usage, en particulier, dans le cas où le conducteur du véhicule utilise une montre connectée.

## Revendications

1. Procédé de commande à distance du moteur d'un véhicule automobile au moyen d'un appareil mobile de télécommunication jumelé au véhicule, ledit procédé comprenant la définition d'une zone de détection et d'identification de l'appareil mobile ayant commandé le démarrage à partir d'un système de contrôle embarqué dans l'habitacle du véhicule, ladite zone est délimitée par une couverture de réception de notifications émises par le système de contrôle à destination dudit appareil mobile de telle sorte qu'après démarrage du moteur et suite à la réception ou à l'absence d'un message de validation émis par l'appareil mobile en réponse à une notification, le système de contrôle commande, respectivement, le maintien du moteur ou l'envoi d'un signal d'avertissement dans le véhicule, **caractérisé en ce qu'**en l'absence d'action en réponse à son signal d'avertissement, le système de contrôle commande l'arrêt du moteur.

2. Procédé selon la revendication 1, **caractérisé en ce que** le système de contrôle diffuse, dans ladite zone de détection et d'identification, un flux continu de messages cryptés susceptibles d'être déchiffrés par le seul appareil mobile ayant effectué le démarrage de façon à déterminer en temps réel sa position par rapport au véhicule.

3. Procédé selon la revendication précédente, **caractérisé en ce que** l'appareil mobile ayant effectué le démarrage se connecte au système de contrôle de façon périodique pour indiquer sa position par rapport au véhicule.

4. Procédé selon l'une des revendications précédentes, **caractérisé en ce que** la couverture de réception utilisée par le système de contrôle pour l'envoi de notifications à l'appareil mobile s'étend au-delà de la zone de dépose située au voisinage de la position du conducteur du véhicule.

5. Procédé selon l'une des revendications précédentes, **caractérisé en ce que** la couverture de réception de notifications émises par le système de contrôle s'étend à l'extérieur du véhicule.

6. Procédé selon l'une des revendications précédentes, **caractérisé en ce que** les trames de données diffusées comportent un numéro de session associé à l'appareil mobile de télécommunication.

7. Procédé selon l'une des revendications précédentes, **caractérisé en ce que** le système de contrôle communique avec ledit appareil mobile selon un protocole Bluetooth.

8. Système de contrôle pour la commande du moteur d'un véhicule automobile en utilisant le procédé selon l'une des revendications 1, 2, et 4 à 7.

9. Programme d'ordinateur comprenant des instructions pour l'exécution des étapes d'un procédé selon l'une des revendications 1, 2, et 4 à 7.

10. Véhicule automobile équipé d'un système de contrôle selon la revendication 8 pour la commande à distance du moteur au moyen d'un appareil mobile de télécommunications.

## Patentansprüche

1. Verfahren zur Fernsteuerung des Motors eines Kraftfahrzeugs mittels einer mit dem Fahrzeug gekoppelten mobilen Telekommunikationseinrichtung, wobei dieses Verfahren die Definition eines Erfassungs- und Identifizierungsbereichs der mobilen Vorrichtung umfasst, die den Start von einem fahrzeugseitigen Steuersystem im Fahrgastraum des Fahrzeugs steuert, wobei der Bereich durch eine Abdeckung für den Empfang von Benachrichtigungen begrenzt ist, die von dem Steuerungssystem an das mobile Gerät über eine solche so dass nach dem Starten des Motors und nach dem Empfang oder Nichtvorliegen einer Validierungsmeldung, die von dem Mobilgerät als Reaktion auf eine Benachrichtigung ausgegeben wird, das Steuersystem bzw. die Wartung des Motors oder das Senden eines Warnsignals im Fahrzeug **dadurch gekennzeichnet ist, dass** in Ermangelung einer Handlung als Reaktion auf sein Warnsignal Das Steuerungssystem befiehlt dem Motor, den Motor abzustellen.

2. Verfahren nach Anspruch 1, **dadurch gekennzeichnet, dass** das Steuerungssystem in dem Erfassungs- und Identifizierungsbereich einen kontinuierlichen Strom verschlüsselter Nachrichten sendet, die von dem einzigen mobilen Gerät entschlüsselt werden können, das so gestartet wurde, dass es in Echtzeit seine Position in Bezug auf das Fahrzeug bestimmt.

3. Verfahren nach dem vorhergehenden Anspruch, **dadurch gekennzeichnet, dass** die startende mobile Vorrichtung periodisch mit dem Steuerungssystem verbunden ist, um ihre Position in Bezug auf das Fahrzeug anzuzeigen.

4. Verfahren nach einem der vorhergehenden Ansprüche, **dadurch gekennzeichnet, dass** sich die Empfangsabdeckung, die von dem Steuerungssystem zum Senden von Benachrichtigungen an das mobile Gerät verwendet wird, über den Absetzbereich hinaus in der Nähe der Fahrerposition des Fahrzeugs erstreckt.

5. Verfahren nach einem der vorhergehenden Ansprüche, **dadurch gekennzeichnet, dass** sich der Geltungsbereich für den Empfang von Meldungen durch das Steuerungssystem auf die Außenseite des Fahrzeugs erstreckt.

6. Verfahren nach einem der vorhergehenden Ansprüche, **dadurch gekennzeichnet, dass** die übertragenen Datenrahmen eine Sitzungsnummer umfassen, die dem mobilen Telekommunikationsgerät zugeordnet ist.

7. Verfahren nach einem der vorhergehenden Ansprüche, **dadurch gekennzeichnet, dass** das Steuerungssystem mit dem mobilen Gerät mittels eines Bluetooth-Protokolls kommuniziert.

8. Steuersystem zur Steuerung des Motors eines Kraftfahrzeugs nach dem Verfahren nach einem der Ansprüche 1, 2 und 4 bis 7.

9. Computerprogramm, das Anweisungen zum Ausführen der Schritte eines Verfahrens nach einem der Ansprüche 1, 2 und 4 bis 7 enthält.

10. Kraftfahrzeug, das mit einem Steuersystem nach Anspruch 8 zur Fernsteuerung des Motors mittels einer mobilen Telekommunikationseinrichtung ausgerüstet ist.

## Claims

1. Method for remote control of the engine of a motor vehicle by means of a mobile telecommunications device paired with the vehicle, said method comprising the definition of a detection and identification zone of the mobile device that controlled the start from an on-board control system in the passenger compartment of the vehicle, said area is bounded by a coverage for receiving notifications issued by the control system to said mobile device of such a so that after starting the engine and following the receipt or absence of a validation message emitted by the mobile device in response to a notification, the control system, respectively, the maintenance of the engine or the sending of a warning signal in the vehicle, **characterized in that** in the absence of action in response to its warning signal, the control system commands the engine to stop.

2. A method according to claim 1, **characterized in that** the control system broadcasts, in said detection and identification area, a continuous stream of encrypted messages capable of being decrypted by the only mobile device that has started in such a way as to determine in real time its position in relation to the vehicle.

3. A method according to the preceding claim, **characterized in that** the start-up mobile device connects to the control system periodically to indicate its position in relation to the vehicle.

4. A method according to one of the preceding claims, **characterized in that** the receiving coverage used by the control system for sending notifications to the mobile device extends beyond the drop-off area in the vicinity of the driver's position of the vehicle.

5. A method according to one of the preceding claims, **characterised in that** the coverage for the receipt of notifications issued by the control system extends to the outside of the vehicle.

6. A method according to one of the preceding claims, **characterized in that** the transmitted data frames comprise a session number associated with the mobile telecommunications device.

7. A method according to one of the preceding claims, **characterized in that** the control system communicates with said mobile device by means of a Bluetooth protocol.

8. A control system for controlling the engine of a motor vehicle using the method according to one of claims 1, 2 and 4 to 7.

9. A computer program comprising instructions for carrying out the steps of a process according to any of claims 1, 2 and 4 to 7.

10. A motor vehicle equipped with a control system according to claim 8 for remote control of the engine by means of a mobile telecommunications device.
